# FASCICULE DE BREVET EUROPEEN

(11) **EP 0 798 490 B1**
(45) Date de publication et mention de la délivrance du brevet: **31.10.2001**
(21) Numéro de dépôt: 97105374.9
(22) Date de dépôt: 01.04.1997
(51) Int. Cl.: F16F 15/131, F16F 15/134

(54) **Double volant amortisseur, notamment pour véhicule automobile**
Zweimassen-Schwungrad, insbesondere für Kraftfahrzeuge
Double mass damper, especially for motor vehicles

(30) Priorité: 28.03.1996 FR 9603888; 17.06.1996 FR 9607479
(43) Date de publication de la demande: 01.10.1997
(73) Titulaire: VALEO, 75017 Paris (FR)
(72) Inventeur: Duclos, Didier, 77330 Ozoir-La-Ferriere (FR); Mokdad, Ayman, 93400 Saint-Ouen (FR); Grieco, Giovanni, 93400 Saint-Ouen (FR)
(74) Mandataire: Gamonal, Didier

(56) Documents cités:
- WO-A-95/28579
- GB-A- 2 251 284
- GB-A- 2 288 652
- US-A- 4 796 740

## Description

La présente invention concerne un double volant amortisseur, notamment pour véhicule automobile.

L'invention concerne un double volant amortisseur du type comportant une première masse tournante propre à être liée en rotation à un arbre d'entrée, une deuxième masse tournante coaxiale montée mobile en rotation sur la première masse tournante par l'intermédiaire de moyens de roulement à billes et conçue pour constituer le plateau de réaction d'un embrayage à friction propre à être lié en rotation de manière débrayable à un arbre de sortie, et au moins un dispositif élastique intervenant entre les masses tournantes pour accoupler élastiquement la deuxième masse à la première masse la deuxième masse comportant une première partie montée mobile en rotation sur la première masse, une deuxième partie montée mobile en rotation sur la première partie et conçue pour constituer le plateau de réaction de l'embrayage à friction, et des moyens limiteurs de couple à friction, contitués par des moyens annulaires à friction à action axiale, étant agencés entre les première et seconde parties de la deuxième masse.

Un exemple d'un double volant amortisseur selon cette conception est décrit et représenté dans le document EP-A-0797024 publié le 24.09.97 et dont le contenu est compris dans l'état de la technique en vertu de l'article 54(3),(4) CBE.

Selon ce document, les moyens de roulement à billes sont constitués par un roulement à billes disposé entre les bords périphériques internes des deux masses, l'un de ces bords périphériques au moins pouvant être porté par un manchon formant moyeu que présente l'une des masses.

Les deux parties de la deuxième masse sont normalement liées en rotation l'une à l'autre, pour assurer un fonctionnement de type normal du double volant amortisseur, par les moyens limiteurs de couple à friction tandis que ces moyens autorisent un patinage relatif en rotation des deux parties en cas d'angle de rotation relative plus important. Ceci se produit par exemple au démarrage ou à l'arrêt du moteur du véhicule automobile : en effet, on passe alors par la fréquence de résonance, la fréquence propre du double volant étant, de manière connue, située à un régime moteur inférieur au régime de ralenti.

Ainsi, le roulement à billes précité, comprenant des billes, une bague extérieure et une bague intérieure, est disposé entre la première masse et la première partie de la deuxième masse.

Une telle disposition nécessite, d'une part, une opération de rectification de l'alésage, de ladite première partie, amené à recevoir la bague extérieure du roulement à billes, et, d'autre part, un traitement de durcissement de ladite première partie, tout au moins de sa face de friction assurant la fonction limiteur de couple.

La présente invention a pour but de rendre encore plus simple et moins onéreux le montage en rotation d'une masse par rapport à l'autre, en particulier en réduisant le nombre de pièces nécessaires à ce montage et le nombre d'opérations de fabrication.

A cet effet, l'invention propose un double volant amortisseur selon la revendication 1.

Grâce à l'invention le nombre d'opérations de fabrication est réduit et il n'y a pas besoin de circlips ou autre pour caler axialement le roulement à billes. La deuxième partie de la deuxième masse est en outre simplifiée.

Avantageusement, la première partie de la deuxième masse comporte un tronçon central dans lequel est prévue la piste extérieure des moyens de roulement à billes et qui se prolonge radialement vers l'extérieur par un voile ayant une face transversale extérieure contre laquelle vient en appui la portion centrale de la seconde partie sous la sollicitation d'une rondelle élastique fixée sur ledit tronçon central par des vis, ou par une tige d'articulation d'un organe élastique.

De préférence la rondelle élastique agit sur une rondelle de frottement, qui porte à plat contre la portion centrale de la deuxième partie. Cette portion centrale est ainsi montée dans une gorge délimitée par le voile et la rondelle de frottement liée en rotation à la rondelle élastique par des pattes engagées dans des trous de la rondelle élastique.

De préférence, le dispositif élastique comporte des organes élastiques montés chacun articulés, d'une part, sur la première masse et, d'autre part, sur la deuxième masse autour excentrés et parallèles à l'axe commun de rotation des deux masses.

Avantageusement, la périphérie radiale interne de chaque organe élastique est montée articulée sur la première partie de la deuxième masse.

De préférence, chaque organe élastique est monté articulé autour d'une extrémité d'une tige d'articulation dont l'autre extrémité traverse axialement la première partie de la deuxième masse tournante pour constituer une tête de sertissage de la tige d'articulation. Cette disposition permet d'allonger les organes élastiques.

Avantageusement, les organes élastiques sont à action radia le et sont globalement réalisés sous la forme de cassettes interposées radialement entre les deux masses sur lesquelles chacune des cassettes est articulée au voisinage de leurs périphéries radiales externe et interne respectivement.

De préférence, un dispositif d'hystérésis à friction est interposé entre les première et deuxième masses.

D'autres caractéristiques et avantages de l'invention apparaîtront à la lecture de la description détaillée qui va suivre pour la compréhension de laquelle on se reportera au dessin annexé dans lequel :
- la figure 1 est une vue en section axiale qui illustre un exemple de réalisation d'un double volant amortisseur conforme aux enseignements de l'invention ;
- la figure 2 est une vue en perspective d'une cassette constituant une partie des organes élastiques ;
- la figure 3 est une vue de détail à plus grande échelle de la partie supérieure de la figure 1 ;
- la figure 4 est une demi-vue analogue à la figure 1 pour un autre exemple de réalisation.

On a représenté sur les figures un double volant amortisseur 10, ici pour véhicule automobile à moteur à combustion interne, qui est constitué pour l'essentiel par une première masse 12 tournante et par une deuxième masse 14 tournante qui sont montées de manière coaxiale mobiles en rotation l'une par rapport à l'autre et qui sont deux éléments coaxiaux d'axe commun X-X.

La première masse 12 est une pièce en forme générale de plateau dont le tronçon central 16 comporte un manchon 18 formant moyeu pour le montage à rotation de la deuxième masse 14 avec interposition de moyens de roulement à billes 20.

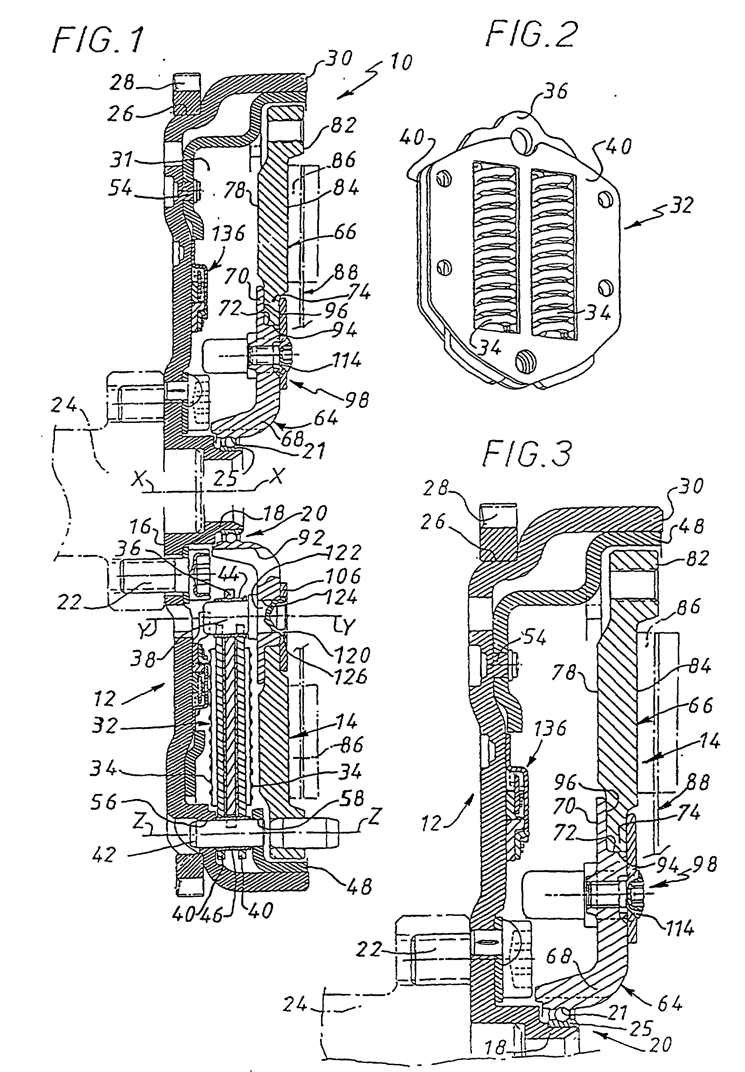

Le tronçon central 16 est fixé par des vis 22 sur un arbre d'entrée, ici un arbre menant, qui est par exemple l'extrémité d'un vilebrequin 24 du moteur à combustion interne du véhicule illustré en silhouette sur la figure 1.

La deuxième masse 14 forme le plateau de réaction d'un embrayage à friction en étant lié de manière débrayable à un arbre de sortie ici un arbre mené par exemple l'arbre d'entrée de la boîte de vitesses.

A sa périphérie radiale extérieure 26, la première masse 12 porte une couronne dentée 28, qui lui est liée en rotation et qui est prévue pour coopérer par exemple avec le pignon de lanceur d'un démarreur d'un moteur à combustion de véhicule automobile équipé du double volant amortisseur 10.

La face transversale 30 de la première masse 12, tournée vers la deuxième masse 14, comporte un évidement 31 constitué par quatre cavités réparties angulairement de manière régulière autour de l'axe X-X et dont chacune reçoit un organe élastique 32 interposé entre les deux masses 12 et 14 pour constituer un dispositif élastique intervenant globalement radialement entre les masses 12 et 14.

Selon une conception connue, chaque organe élastique 32 est une cassette comportant des ressorts hélicoïdaux 34 qui travaillent en compression entre un voile intérieur 36, monté articulé sur la seconde masse 14 par l'intermédiaire d'un axe ou tige d'articulation 38, et des plaques extérieures 40 de guidage entre lesquelles sont reçus les ressorts 34 et le voile 36 et qui sont montées articulées chacune sur la première masse 12 par l'intermédiaire d'un axe ou tige d'articulation 42.

Ainsi, chaque cassette formant organe élastique 32 est montée, ici, articulée au voisinage de sa périphérie radiale interne 44 autour d'un axe Y-Y, sur la deuxième masse 14, et au voisinage de sa périphérie radiale externe 46 autour d'un axe Z-Z sur la première masse 12, les axes Y-Y et Z-Z d'articulation de chaque cassette 32 étant parallèles à l'axe général de rotation X-X. On ne décrira pas ici en détail la conception connue des organes élastiques 32. Pour mémoire, on rappellera que le voile 36 et les plaques 40 présentent en vis-à-vis des logements ou fenêtres pour montage des ressorts 34.

La première masse 12, en forme de plateau tournant creux, comporte une portion rapportée intérieurement qui est réalisée sous la forme d'un anneau 48. La fixation axiale et la liaison en rotation de l'anneau 48 est assurée par une série de pions 54 rivetés répartis angulairement de manière régulière autour de l'axe X-X et qui sont alternés angulairement avec les tiges d'articulation 42.

Comme on peut le voir à la partie inférieure de la figure 1, chaque tige d'articulation 42 est ainsi montée en chape, d'une part, dans un trou 56 formé au voisinage de la périphérie externe 26 du plateau 12 et, d'autre part, dans un trou 58 formé dans l'anneau 48.

Dans le but d'augmenter les performances du double volant amortisseur 10, la deuxième masse 14 est réalisée en deux parties 64 et 66.

La première partie 64, par l'intermédiaire de son alésage intérieur, est montée à rotation par rapport au moyeu 18 de la première masse 14 avec interposition des moyens de roulement à billes 20. Cette première partie 64 comporte un tronçon central 68 d'épaisseur axiale relativement importante dans lequel est prévue, conformément à la présente invention, la piste extérieure 21 des moyens de roulement à billes 20 et qui se prolonge radialement vers l'extérieur par un voile 70, qui s'étend radialement depuis la surface cylindrique extérieure 72 du tronçon central 68. Ce voile 70 est donc d'épaisseur réduite par rapport au tronçon central 68.

La surface cylindrique extérieure 72 constitue une surface de portée cylindrique de manière que le tronçon central 68 constitue un moyeu qui reçoit à rotation la portion centrale en forme de voile 74 de la seconde partie 66 de la deuxième masse 14. La première partie 64 porte les tiges 38.

Cette seconde partie 66 présente une forme générale de plateau en forme de disque annulaire qui est une pièce de fonderie, usuellement en fonte, qui s'étend dans un plan transversal avec une première face latérale plane intérieure 78, qui s'étend en regard de la première masse 14, et une seconde face latérale ou transversale extérieure 82 dans laquelle est délimitée une face latérale 84 constituant une face de friction pour la garniture de friction 86, illustrée en silhouette sur la figure 1, appartenant à un disque de friction 88 d'un embrayage à friction associé au double volant amortisseur 10 et qui, à la faveur de son moyeu cannelé intérieurement, non représenté, est notamment lié en rotation à un arbre de sortie, ici un arbre mené à savoir l'arbre d'entrée de la boîte de vitesses, coaxial au vilebrequin 24 formant arbre d'entrée. Ainsi, le plateau de la seconde partie 66 forme le plateau de réaction de l'embrayage à friction lié de manière débrayable à l'arbre de sortie. Cette seconde partie 66 a une forme simple car elle n'est pas en contact avec les moyens de roulement 20.

Le tronçon central formant moyeu 68 de la première partie 64 comporte une série de trous 92 permettant la mise en place et le serrage des vis 22 de fixation de la première masse 12 sur le vilebrequin 24 à l'aide d'au moins un outil traversant les trous 92 pour accès aux têtes des vis 22.

Ces trous 92 sont répartis angulairement de manière régulière et sont agencés selon un cercle situé radialement vers l'intérieur le plus proche possible des moyens de roulement à billes 20 en sorte que les billes des moyens de roulement à billes 20 sont implantées radialement en dessous des trous 92 et que le roulement est ventilé. Ces trous 92 peuvent être implantés le plus près possible des billes des moyens de roulement 20.

La portion centrale 74 de la seconde partie 66 est montée avec possibilité de rotation sur la surface de portée 72 par l'intermédiaire de son alésage intérieur 94 qui permet la mise en place de la portion centrale 74 axialement sur le moyeu 68 jusqu'à ce que la portion de la face transversale intérieure 78 de la portion centrale 74 vienne en appui contre la zone en vis-à-vis de la face transversale extérieure 96 du voile 70.

Des moyens limiteurs de couple 98 sont interposés entre les première 64 et seconde 66 parties de la deuxième masse 14.

Les moyens limiteurs de couple sont du type à friction et de forme générale annulaire. Ils sont agencés radialement autour du tronçon central formant moyeu 68 de la première partie 64. Ils sont constitués pour l'essentiel par la portion centrale 74 et le voile 70 contre la face transversale extérieure 96 duquel la portion centrale 74 est sollicitée en appui axial.

L'effort de pression axiale de la portion centrale 74, latéralement de la droite vers la gauche en considérant les figure 1 et 2, est exercé par une rondelle élastique 106 fixée sur le moyeu central 68 de la première partie 64 par des vis 114 réparties angulairement de manière régulière.

Afin de permettre de réaliser la fixation des tiges d'articulation 38 par sertissage de leurs têtes 120, à la manière de rivets, les corps 122 des tiges d'articulation traversent le moyeu 68 de part en part dans des trous 124 prévus à cet effet et la rondelle élastique 106 comporte une série de trous 126 agencés en regard des axes d'articulation 38 pour recevoir le sertissage des têtes 120.

On a ainsi réalisé des moyens d'accouplement à friction 98 entre les deux parties 64 et 66 de la deuxième masse tournante 14 qui sont des moyens limiteurs de couple, c'est-à-dire qu'ils permettent une rotation relative des deux parties 64 et 66 l'une par rapport à l'autre autour de l'axe X-X lorsque le couple appliqué à l'une des deux parties par rapport à l'autre est supérieur à une valeur de tarage déterminée par la structure des moyens d'accouplement à friction 98 et notamment par la rondelle élastique 106.

A cet effet, la rondelle élastique 106 peut être réalisée sous la forme d'une rondelle Belleville, en variante d'un diaphragme, ou d'une rondelle ondulée.

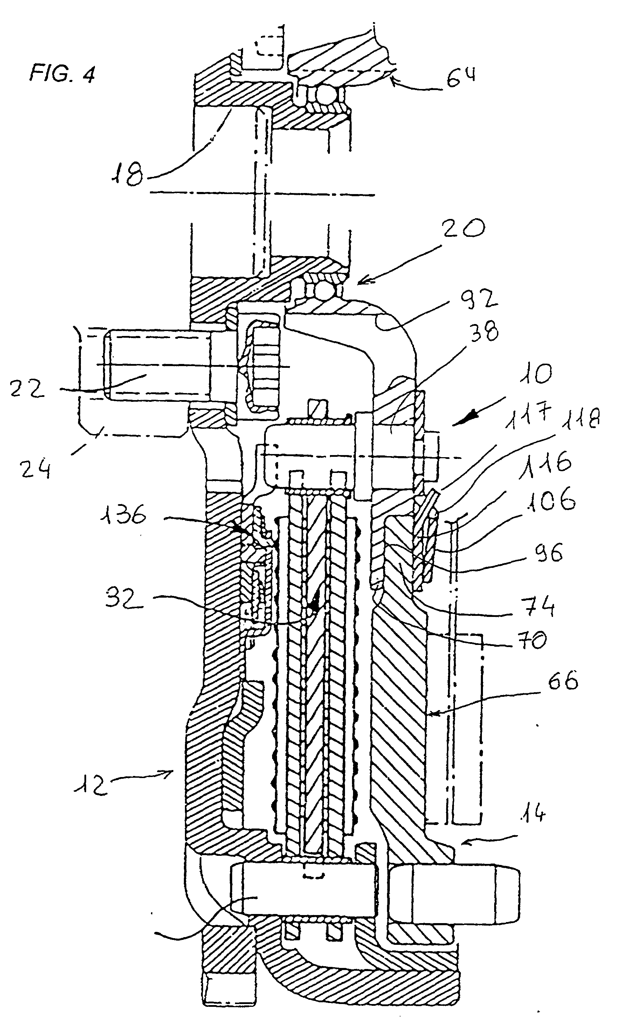

En variante (figure 4) la portion centrale 74 de la deuxième partie 66 est en appui contre la face extérieure 96 du voile 70 et contre la face d'une rondelle de frottement 116, ici métallique, présentant des pattes 117 à sa périphérie interne. Ces pattes 117 sont redressées vers l'extérieur et traversent des orifices 118 ménagés dans la rondelle élastique 106 fixée sur le moyeu central 68 par les vis 114 ou ici par les tiges d'articulation 38 présentant une collerette en contact avec la face de la partie 64 tournée vers la première masse et une partie en forme de rivet traversant ladite partie 64 et des trous d'arrimage de la rondelle 106. La tête du rivet est écrasée au contact de la rondelle 106.

La rondelle Belleville 106 présente donc à sa périphérie interne un anneau avec des trous d'arrimage pour les tiges 38 et au-delà un profil en redan avec une partie périphérique externe de forme tronconique.

Ainsi la rondelle de frottement 116 porte à plat sur la portion centrale 74, en étant pressée au contact de la portion 74 par la rondelle élastique 106 liée en rotation à la rondelle de frottement 116 par les pattes 117 et les trous 118 formés dans un pli en redan reliant l'anneau interne à la partie périphérique de la rondelle élastique 106.

La face de friction 96, du voile 70 de la première partie 64 de la deuxième masse 14, intervenant dans les moyens limiteurs de couple 98 doit être traitée de façon à présenter une dureté suffisante ; dès lors, ce traitement étant appliqué à la première partie 64, celle-ci présente une dureté suffisante pour pouvoir comporter la piste extérieure 21 des moyens de roulement à billes 20 ; ainsi, grâce à l'invention, on économise une opération coûteuse de traitement thermique ainsi d'ailleurs qu'une opération d'usinage, également coûteuse, qui aurait été nécessaire pour recevoir une piste extérieure rapportée, comme c'est le cas dans l'art antérieur.

Cette disposition présente l'avantage supplémentaire suivant : lorsque la piste extérieure 21 des moyens de roulement à billes 20 est prévue sur une bague extérieure rapportée, la tenue mécanique de ladite bague impose de lui conférer une certaine épaisseur radiale ; la position proche de l'axe des vis de fixation 22 étant imposée par la géométrie du vilebrequin 24, les trous 92 ménagés dans la première partie 64 pour le passage de ces vis 22 sont très proches de l'axe, tout ceci conduisant à des billes, pour les moyens de roulement à billes, d'un certain diamètre ; grâce à l'invention, la tenue mécanique de la première partie 64 en soi permet, en fonction des trous 92, le montage de billes de plus grand diamètre, ce qui, comme on le sait, est favorable pour la bonne tenue des moyens de roulement à billes. La tenue en température des moyens de roulement à billes 20 est également meilleure car la piste extérieure 21 est portée par une pièce plus massive.

Bien entendu, la bague interne 25 des moyens de roulement à billes 20 peut être standardisée ; ce peut être également le cas de la première partie 64.

De plus, on appréciera que les moyens de roulement à billes 20 sont bien ventilés et que le plateau de réaction est simplifié puisque c'est la première partie qui est montée à rotation sur la première masse. En outre, les organes élastiques peuvent être de grande longueur puisqu'ils sont articulés sur la première partie.

Il est prévu des moyens 136 d'hystérésis à frottement interposés entre la première masse 12 et la deuxième masse 14 ; les moyens 136 sont de conception générale annulaire et par exemple du genre de ceux décrits dans le document EP-A-0797024. Comme on peut le voir aux figures 1 et 3, le dispositif d'hystérésis à frottement 136 est agencé radialement à l'extérieur par rapport aux moyens limiteurs de couple 98 mais à proximité immédiate de ceux-ci.

Dans tous les cas, en fonctionnement les cassettes 32 s'inclinent en sorte que les ressorts 34 sont comprimés. En même temps, après rattrapage éventuel d'un jeu, un frottement apparaît. En cas de fort couple, le limiteur de couple intervient de manière précitée. Une filtration optimale des vibrations est ainsi obtenue.

Bien entendu, les cassettes 32 peuvent ne comporter qu'un seul ressort prenant appui, d'une part, sur une rondelle solidaire d'une tige articulée sur la première partie 64 et, d'autre part, sur l'extrémité d'un boîtier traversé par la tige, le boîtier étant articulé sur la première masse 12.

Le dispositif élastique peut comporter des ressorts disposés circonférentiellement ; dans ce cas, la première partie 64 porte un disque agissant sur les extrémités circonférentielles des ressorts par l'intermédiaire de bras, lesdits ressorts étant portés par la première masse.

## Revendications

1. Double volant amortisseur (10), notamment pour véhicule automobile, du type comportant une première masse (12) tournante propre à être liée en rotation à un arbre d'entrée (24), une deuxième masse (14) tournante coaxiale montée mobile en rotation sur la première masse (12) par interposition de moyens de roulement à billes (20) et conçue pour constituer le plateau de réaction d'un embrayage à friction (86) propre à être lié en rotation de manière débrayable à un arbre de sortie, et un dispositif élastique intervenant entre les masses (12, 14) pour accoupler élastiquement la deuxième masse (14) à la première masse (12), dans lequel la deuxième masse (14) comporte une première partie (64) montée mobile en rotation sur la première masse (12) et une seconde partie (66) montée mobile en rotation sur la première partie (64) et conçue pour constituer le plateau de réaction (84) de l'embrayage à friction, des moyens (98) limiteurs de couple à friction, constitués par des moyens annulaires à friction à action axiale, étant agencés entre les première (64) et seconde (66) parties de la deuxième masse (14), la piste extérieure (21) pour les billes des moyens de roulement à billes (20) étant constituée par le bord périphérique interne de la première partie (64) de la deuxième masse (14).

2. Double volant amortisseur selon la revendication 1, **caractérisé par le fait que** la première partie (64) de la deuxième masse (14) comporte un tronçon central (68) dans lequel est prévue la piste extérieure (21) des moyens de roulement à billes (20) et qui se prolonge radialement vers l'extérieur par un voile (70) ayant une face transversale extérieure (96) contre laquelle vient en appui la portion centrale (74) de la seconde partie (66) sous la sollicitation d'une rondelle élastique (106) fixée sur ledit tronçon central (68).

3. Double volant amortisseur selon la revendication 2, **caractérisé en ce que** la rondelle élastique (106) agit sur une rondelle de frottement (116) Pour presser celle-ci au contact de la portion centrale (74) de la seconde partie (66).

4. Double volant amortisseur selon l'une quelconque des revendications 1 à 3, **caractérisé par le fait que** le dispositif élastique comporte des organes élastiques (32) montés chacun articulés, d'une part (42), sur la première masse (12) et, d'autre part (38), sur la deuxième masse (14) autour d'axes (Y-Y, Z-Z) excentrés et parallèles à l'axe commun (X-X) de rotation des deux masses (12,14).

5. Double volant amortisseur selon la revendication 4, **caractérisé par le fait que** la périphérie radiale interne (44) de chaque organe élastique (32) est montée articulée sur la première partie (64) de la deuxième masse (14).

6. Double volant amortisseur selon la revendication 5, **caractérisé par le fait que** chaque organe élastique (32) est monté articulé autour d'une extrémité d'une tige d'articulation (38) dont l'autre extrémité (120) traverse axialement la première partie (64) de la deuxième masse (14) pour constituer une tête de sertissage (120) de la tige d'articulation (38).

7. Double volant amortisseur selon l'une quelconque des revendications 4 et 5, **caractérisé par le fait que** les organes élastiques sont globalement réalisés sous la forme de cassettes.

8. Double volant amortisseur selon l'une quelconque des revendications précédentes, **caractérisé par le fait qu'**un dispositif d'hystérésis à friction (136) est interposé entre les première (12) et deuxième (14) masses.

## Patentansprüche

1. Zweimassen-Dämpfungsschwungrad (10), insbesondere für Kraftfahrzeuge, umfassend eine erste rotierende Masse (12), die drehfest mit einer Eingangswelle (24) verbunden werden kann, eine koaxiale zweite rotierende Masse (14), die unter Einfügung von Kugellagermitteln (20) drehbeweglich an der ersten Masse (12) gelagert und so gestaltet ist, daß sie die Gegenanpreßplatte einer Reibungskupplung (86) bildet, die ausrückbar drehfest mit einer Ausgangswelle verbindbar ist, und eine elastische Vorrichtung, die zwischen den Massen (12, 14) zum Einsatz kommt, um die zweite Masse (14) elastisch mit der ersten Masse (12) zu verbinden, wobei die zweite Masse (14) einen drehbeweglich an der ersten Masse (12) gelagerten ersten Teil (64) und einen drehbeweglich am ersten Teil (64) gelagerten und zur Bildung der Gegenanpreßplatte (84) der Reibungskupplung gestalteten zweiten Teil (66) umfaßt, wobei reibschlüssige Drehmomentbegrenzungsmittel (98), die aus axial wirksamen reibschlüssigen ringförmigen Mitteln bestehen, zwischen dem ersten (64) und dem zweiten Teil (66) der zweiten Masse (14) angeordnet sind, wobei die Außenbahn (21) für die Kugeln der Kugellagermittel (20) durch den inneren Umfangsrand des ersten Teils (64) der zweiten Masse (14) gebildet wird.

2. Zweimassen-Dämpfungsschwungrad nach Anspruch 1,
**dadurch gekennzeichnet, daß** der erste Teil (64) der zweiten Masse (14) ein Mittelstück (68) umfaßt, in dem die Außenbahn (21) der Kugellagermittel (20) vorgesehen ist und das radial nach außen durch eine Zwischenscheibe (70) verlängert wird, die eine äußere Querfläche (96) aufweist, an der der mittlere Abschnitt (74) des zweiten Teils (66) unter der Beaufschlagung durch eine Federscheibe (106) zur Anlage kommt, die an dem besagten Mittelstück (68) befestigt ist.

3. Zweimassen-Dämpfungsschwungrad nach Anspruch 2,
**dadurch gekennzeichnet, daß** die Federscheibe (106) auf eine Reibscheibe (116) einwirkt, um diese in Kontakt mit dem mittleren Abschnitt (74) des zweiten Teils (66) anzupressen.

4. Zweimassen-Dämpfungsschwungrad nach einem der Ansprüche 1 bis 3, **dadurch gekennzeichnet, daß** die elastische Vorrichtung elastische Organe (32) umfaßt, die jeweils einerseits (42) an der ersten Masse (12) und andererseits (38) an der zweiten Masse (14) um Achsen (Y-Y, Z-Z) herum gelenkig gelagert sind, die außermittig und parallel zur gemeinsamen Drehachse (X-X) der beiden Massen (12, 14) verlaufen.

5. Zweimassen-Dämpfungsschwungrad nach Anspruch 4,
**dadurch gekennzeichnet, daß** der radial innere Bereich (44) jedes elastischen Organs (32) gelenkig am ersten Teil (64) der zweiten Masse (14) gelagert ist.

6. Zweimassen-Dämpfungsschwungrad nach Anspruch 5, **dadurch gekennzeichnet, daß** jedes elastische Organ (32) gelenkig um ein Ende eines Gelenkstifts (38) gelagert ist, dessen anderes Ende (120) axial durch den ersten Teil (64) der zweiten Masse (14) hindurchgeht, um einen Auffalzkopf (120) zum Auffalzen des Gelenkstifts (38) zu bilden.

7. Zweimassen-Dämpfungsschwungrad nach einem der Ansprüche 4 oder 5, **dadurch gekennzeichnet, daß** die elastischen Organe insgesamt in Form von Kassetten ausgeführt sind.

8. Zweimassen-Dämpfungsschwungrad nach einem der vorangehenden Ansprüche, **dadurch gekennzeichnet, daß** zwischen der ersten (12) und der zweiten Masse (14) eine reibschlüssige Hysteresevorrichtung (136) eingefügt ist.

## Claims

1. A damping double flywheel (10), especially for a motor vehicle, of the type comprising a first rotating mass (12) arranged to be coupled in rotation to an input shaft (24), a coaxial second rotating mass (14), mounted so as to be rotatable on the first mass (12) through interposed ball bearing means (20) and designed to constitute the reaction plate of a friction clutch (86) which is adapted to be coupled releasably to an output shaft, and an elastic device operatively interposed between the masses (12, 14), whereby to couple the second mass (14) elastically to the first mass (12), wherein the second mass (14) comprises a first part (64) which is mounted for rotational movement on the first mass (12), and a second part (66) which is mounted for rotational movement on the first part (64) and is designed to constitute the reaction plate (84) of the friction clutch, with friction torque limiting means (98), consisting of axially acting annular means, being arranged between the first part (64) and the second part (66) of the second mass (14), the outer track (21) for the balls of the ball bearing means (20) consisting of the inner peripheral edge of the first part (64) of the second mass (14).

2. A damping double flywheel according to Claim 1, **characterised by** the fact that the first part (64) of the second mass (14) includes a central portion (68) in which the outer track (21) of the ball bearing means (20) is situated, and which is extended radially outwards by a plate portion (70) having an outer transverse face (96) against which the central portion (74) of the second part (66) is brought into engagement by the biassing action of an elastic ring (106) fixed on the said central portion (68).

3. A damping double flywheel according to Claim 2, **characterised in that** the elastic ring (106) acts on a friction ring (116) to press the latter into contact with the central portion (74) of the second part (66).

4. A damping double flywheel according to any one of Claims 1 to 3, **characterised by** the fact that the elastic device comprises elastic members (32), each of which is articulated, firstly (42) on the first mass (12) and secondly (38) on the second mass (14), about eccentric axes (Y-Y, Z-Z) which are parallel to the common axis of rotation (X-X) of the two masses (12, 14).

5. A damping double flywheel according to Claim 4, **characterised by** the fact that the inner radial periphery (44) of each elastic member (32) is articulated on the first part (64) of the second mass (14).

6. A damping double flywheel according to Claim 5, **characterised by** the fact that each elastic member (32) is articulated about one end of an articulating pin (38), the other end (120) of which extends axially through the first part (64) of the second mass (14) so as to constitute a seaming head (120) for the articulating pin (38).

7. A damping double flywheel according to Claim 4 or Claim 5, **characterised by** the fact that the elastic members are made generally in the form of cassettes.

8. A damped double flywheel according to any one of the preceding Claims, **characterised by** the fact that a friction hysteresis device (136) is interposed between the first mass (12) and the second mass (14).
